# EUROPEAN PATENT APPLICATION

(11) **EP 1 674 838 A2**
(43) Date of publication of application: **28.06.2006**
(21) Application number: 05112225.7
(22) Date of filing: 15.12.2005
(51) Int. Cl.: G01F 23/32, G01F 25/00

(54) **A Calibrating Method for Level Sensors**

(30) Priority: 23.12.2004 DE 102004062100
(71) Applicant: TI Automotive (Neuss) GmbH, 41460 Neuss (DE)
(72) Inventor: Henschel, Matthias, 77836, Rheinmünster (DE); Schreuder, Peter, 47623, Kevelaer (DE)
(74) Representative: von Kirschbaum, Alexander

(57) **Abstract**

In the calibrating method for a level sensor (12) installed in a tank (10) according to the invention, a float (14) of the level sensor (12) sinks down to a tank bottom (24) in the empty tank (10). This position of the float (14) is stored in a sensor electronics of the level sensor (12) as the minimum level. Subsequently, the empty tank (10) together with the level sensor (12) is turned such that a tank top (28) is arranged at the bottom and the tank bottom (24) is arranged at the top. In this position of the empty tank (10), the float (14) sinks down to the tank top (28) so that this position of the float (14) can be stored in the sensor electronics of the level sensor (12) as the maximum level. By turning the tank (10) together with the level sensor (12), the calibration of the level sensor is effected particularly simply and fast.

## Description

The invention relates to a calibrating method for level sensors which are particularly arranged in the fuel tank of a motor vehicle.

Typically, level sensors comprise a float connected with a rotating shaft via a lever. Depending on the level of a liquid, particularly fuel, in a tank, the float is located at a certain height corresponding to the current level whereby the rotating shaft assumes an angular position corresponding to a certain level. To indicate an exact level by means of a measured angular position of the rotating shaft and a measured height of the float, respectively, it is required to calibrate the level sensor. To this end, the position of the float and the rotating shaft, respectively, is measured at a minimum level and a maximum level.

From US 5,485,740, it is known to measure the position of the float in an empty tank and to store this float position in a sensor electronics as the minimum level. Subsequently, the tank is completely filled with a liquid and the current float position is stored in the sensor electronics as the maximum level.

In such a calibrating method for level sensors, it is disadvantageous that a lot of time is required for calibrating the level sensor.

It is an object of the invention to provide a calibrating method for level sensors by means of which a quick and exact calibration is possible.

This and other objects are solved, according to the invention, with the features of claim 1.

In the electronic calibrating method according to the invention, a level sensor is used which is arranged in an empty tank in such a manner that a float of the level sensor is disposed between a tank bottom of the tank and a tank top of the tank. First, the electronic calibrating method is started by, e.g., starting the level sensor by switching on an electric power source, for example. Subsequently, the float in the empty tank sinks downward in the direction of gravity until it hits a bottom stop which is the tank bottom in particular. As an alternative, the float may of course be already in contact with the bottom stop when the electronic calibrating method is started. After the float has come into contact with the bottom stop and does not move any longer, the current float position is stored as the minimum level. To store the float position, a memory means of a sensor electronics of the level sensor is used. Subsequently, the float in the empty tank is moved toward the tank top. This is effected until the float hits a top stop which is the tank top in particular. After the float has come into contact with the top stop and does not move any more, the current float position is stored as the maximum level by means of the memory means of the sensor electronics. It is also possible to initially measure the maximum level and measure the minimum level thereafter.

Due to the fact that the minimum level and the maximum level are measured for the calibration of the level sensor while the level sensor is installed in the tank, location deviations for the level sensor in the tank can be compensated for so that the calibration can be effected in a correspondingly exact manner. Due to the fact that the float is moved in the tank while the latter is empty, the time consumed for filling in liquid and for discharging the liquid and for cleaning the tank, if necessary, is not required. Thus, the calibration of the level sensor can be effected correspondingly quickly.

In a preferred embodiment which represents an independent invention, the calibration of the level is effected exactly once, particularly when the level sensor is started for the first time. This happens, e.g., when the level sensor is supplied with electric power for the first time and/or no value is stored for the minimum level and the maximum level. Thus, the level sensor is automatically brought into a calibration state when it is switched on for the first time, for example, without any additional signal connection being necessary for triggering the calibration method according to the invention. Since no independent triggering command is required for the calibration method, a connecting element required therefor, which, for example, might take the form of cables or connector contacts, can be saved so that an opening for this signal connection is avoided. This reduces the risk of a leakage occurring at a connecting spot from the interior of the tank to the outside. Further, the mounting requirements are reduced since no sealing measures are required for the spared signal connection. It is not absolutely necessary to determine the maximum level with an empty tank in this embodiment.

To automatically measure the minimum level and the maximum level from outside without any controlling measures, the level sensor comprises a calibrating electronics, for example, which is preferably arranged completely within the tank. By means of the calibrating electronics, e.g , a float position is detected as the minimum level or the maximum level when the float position is immobile for a predetermined time, e.g., for three seconds. The respectively other level, i.e., the maximum level or the minimum level, is detected due to the fact that, for example, the respective float position has moved away from the former detected float position by a definite minimum distance and has also been immobile for a definite time. After both the minimum level and the maximum level have been stored, a renewed starting of the level sensor does not result in that the calibrating method according to the invention will be started again but only in that the level in the fuel tank is measured while the minimum and maximum levels measured at first are taken into consideration. The calibrating method according to the invention is only performed again after a "hardware reset" by, e.g., removing the level sensor from the tank and resetting it mechanically and/or electrically into the state before the very first start without a signal connection extending through the tank This is effected by erasing the stored values for the minimum level and the maximum level. Typically, a motor vehicle tank comprises a mounting hole for the installation of, e.g., a fuel pump in the tank. Via this mounting hole, the accessibility of the level sensor for a hardware reset is guaranteed.

To move the float toward the tank top in the empty tank, a rotating shaft of the level sensor may be led out of the tank. Thereby, it is possible to rotate the rotating shaft by means of a lever which is particularly releasably connectable to the rotating shaft for the movement of the float. After the level sensor has been calibrated, the lever can be removed from the rotating shaft so that the latter can be connected with an indicating means for indicating the current level.

Preferably, the float in the empty tank is moved towards the tank top by turning the empty tank together with the installed level sensor in such a manner that the tank top is located at the bottom and the tank bottom at the top after the turning has been effected. The turning is particularly effected automatically, e.g., by means of a rotatable gripping means or handling device. Thereby, the float can sink down toward the tank top due to gravity. Externally actuating the float or the rotating shaft which might be possibly provided is not required so that the calibration of the level sensor is particularly simple. Further, it is also possible to calibrate level sensors without a lever such as, e.g., a contactless level sensor which magnetically detects the position of a float arranged in a rising pipe. It is particularly possible to already perform the calibration of the level sensor when the level sensor is installed in the tank since no additional tools or contrivances such as test liquid are required therefor.

Preferably, the tank bottom and/or the tank top are horizontally oriented before the minimum level or the maximum level are stored. Thereby, depending on the level sensor used, possibly occurring measuring inaccuracies for measuring the minimum or maximum level are avoided so that the accuracy of the calibration is improved.

Preferably, the level values between the minimum level and the maximum level are detected by means of a level curve which is particularly stored in the sensor electronics and can be empirically detected for the tank respectively used. The level curve is detected by gauging the capacity by liters, gallons or the like, for example. Thereby, it is possible to also use tanks with an irregular geometrical shape and ensure an exact measurement of the level. If a special level curve is not stored in the sensor electronics, the level values between the minimum level and the maximum level can be linearly interpolated as a setup, for example.

Hereinafter, the invention is explained in detail with reference to the ac companying drawings.

In the Figures:
- Fig. 1: shows a schematic sectional view of an empty fuel tank with an installed level sensor, and
- Fig. 2: shows a schematic sectional view of the tank illustrated in Fig. 1 in a turned position.

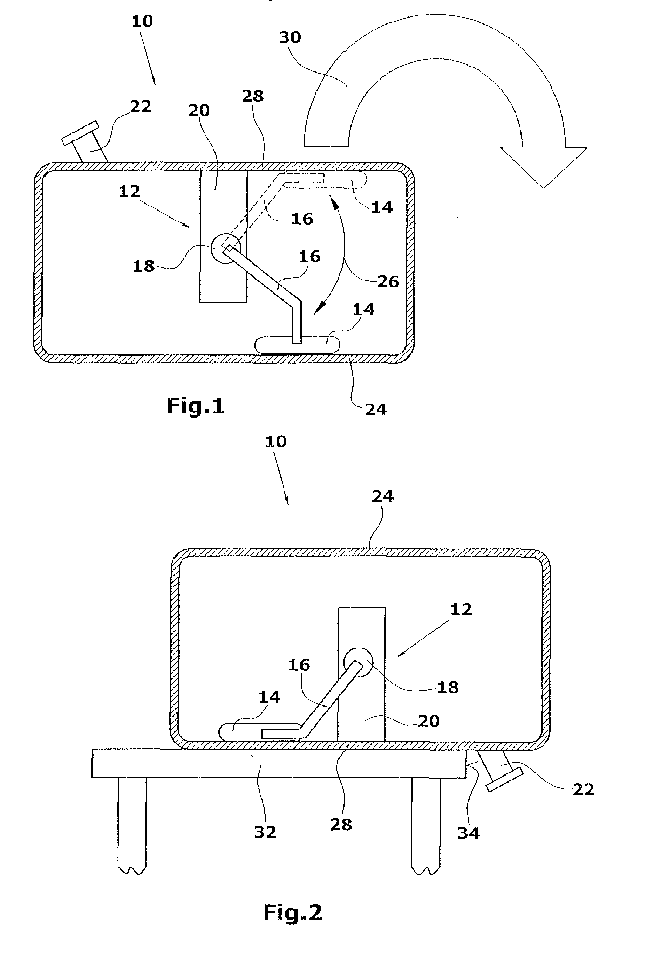

In the calibrating method according to the invention, a tank 10 comprises a level sensor 12 (Fig. 1). The level sensor 12 comprises a float 14 connected with a rotating shaft 18 via a lever 16. The rotating shaft 18 is connected with a sensor body 20 lodged in the tank 10 and forming a part of the tank wall. Further, the tank 10 comprises a tank connection piece 22 via which fuel can be filled into the tank 10.

Since no liquid is filled in the tank 10, the float 14 of the level sensor 12 is able to sink down to a tank bottom 24 so that the tank bottom 24 acts as a bottom stop for the float 14. The float 14 has an oblong configuration and is pivotally, i.e. movably, connected with the lever 16 so that the float 14 lies on the tank bottom 24 with its entire width. In this position, the position of the float 14 and the rotational position of the rotating shaft 18, respectively, corresponds to the minimum level so that this position is stored as the minimum level at a sensor electronics of the level sensor 12 by means of a memory means.

Subsequently, within the empty tank 10, the float 14 is moved towards a tank top 28 in the direction of an arrow 26 until it contacts the tank top 28 (position shown in dashed lines). This position of the float 14 and the rotating shaft 18, respectively, is stored as the maximum level in the sensor electronics of the level sensor 12.

To move the float 14 within the empty tank 10 from the position corresponding to the minimum level into the position corresponding to the maximum level, the tank 10 together with the level sensor 12 is turned in the direction of an arrow 30 before the maximum level is stored so that the tank top 28 is located at the bottom and the tank bottom 24 is located at the top (Fig. 2). In the turned position of the tank 10, the float 14 can sink down onto the tank top 28 that is arranged at the bottom in the direction of gravity so that the position of the float 14 and the rotating shaft 18, respectively, which corresponds to the maximum level, can be reached particularly simply. To guarantee a horizontal orientation of the tank bottom 24 and the tank top 28, respectively, the tank 10 can be turned on a table 32, for example, so that the tank connection piece 22, which might possibly hinder a horizontal orientation of the tank 10, is arranged next to a table edge 34.

## Claims

1. An electronic calibrating method for level sensors (12) arranged particularly in a motor vehicle fuel tank (10) and comprising a float (1.4) arranged between a tank bottom (24) and a tank top (28) of the tank, with the following steps:
starting the electric calibrating method,
letting the float (14) sink down in the empty tank (10) until the float (14) hits a bottom stop,
storing the current float position as the minimum level by means of a memory means of a sensor electronics,
moving the float (14) in the empty tank (10) toward the tank top (28) until the float (14) hits a top stop, and
storing the current float position as the maximum level by means of the memory means of the sensor electronics.

2. The calibrating method according to claim 1, **characterized in that** the calibrating method is performed exactly once upon the first start of the level sensor (12) until a hardware reset is possibly performed.

3. The calibrating method according to claim 1 or 2, **characterized in that** the sensor electronics comprises a calibrating electronics, the calibrating electronics and possibly the memory means being arranged completely within the tank (10).

4. The calibrating method according to one of claims 1 - 3, **characterized in that** before the movement of the float (14) toward the tank top (28), the empty tank (10) is turned such that after the turning has been effected, the tank top (28) is arranged at the bottom and the movement of the float (14) toward the tank top (28) is effected by letting the float (14) sink down.

5. The calibrating method according to one of claims 1 - 4, **characterized in that** the bottom stop is the tank bottom (24) and/or the top stop (28) is the tank top.

6. The calibrating method according to one of claims 1 - 5, **characterized in that** the tank bottom (24) and/or the tank top (28) are oriented horizontally before the minimum level and/or the maximum level will be stored.

7. The calibrating method according to one of claims 1 - 6, **characterized in that** the level sensor (12) comprises a rotating shaft (18) connected with the float (14) and led out of the tank (10), and the rotating shaft (18) is rotated by means of a particularly removable lever for moving the float (14).

8. The calibrating method according to one of claims 1 - 7, **characterized in that** level values between the minimum level and the maximum level are detected by means of a level curve empirically detected for the tank used (10) and stored in the sensor electronics.
